# EUROPÄISCHE PATENTSCHRIFT

(11) **EP 0 939 708 B1**
(45) Veröffentlichungstag und Bekanntmachung des Hinweises auf die Patenterteilung: **18.04.2001**
(21) Anmeldenummer: 97951794.3
(22) Anmeldetag: 20.11.1997
(51) Int. Cl.: B60R 21/32

(54) **Steuervorrichtung für ein Rückhaltemittel in einem Kraftfahrzeug**
Control device for a restraining medium in a motor vehicle
Dispositif de commande pour un moyen de retenue placé dans un véhicule automobile

(30) Priorität: 21.11.1996 DE 19648267
(43) Veröffentlichungstag der Anmeldung: 08.09.1999
(73) Patentinhaber: SIEMENS AKTIENGESELLSCHAFT, 80333 München (DE)
(72) Erfinder: POPP, Peter, D-93049 Regensburg (DE); HEITZER, Günter, D-93102 Pfatter (DE); LENNINGER, Ralf-Johannes, D-93093 Donaustauf (DE)
(86) Internationale Anmeldenummer: DE9702727
(87) Internationale Veröffentlichungsnummer: WO9822315

(56) Entgegenhaltungen:
- EP-A- 0 708 002
- EP-A- 0 738 633
- DE-A- 4 417 064
- US-A- 5 460 405

## Beschreibung

Die Erfindung betrifft eine Steuervorrichtung für ein Rückhaltemittel in einem Kraftfahrzeug (siehe zum Beispiel DE-A-44 17 064, dem Obergegriff entsprechend).

Moderne Steuervorrichtungen für Rückhaltemittel in Kraftfahrzeugen erkennen durch den Einsatz geeigneter Sensorik nicht nur, ob ein für ein Auslösen des Rückhaltemittels ausreichend starker Aufprall vorliegt, sondern auch, ob ein Kindersitz auf dem Beifahrersitz abgestellt ist. Wird ein Kindersitz auf dem Beifahrersitz erkannt, wird ein Aufblasen eines vor dem Beifahrersitz angebrachten Airbags zum Frontaufprallschutz bzw. eines zur Seite des Beifahrersitzes angeordneten Airbags zum Seitenaufprallschutz verhindert bzw. stark reduziert. Ein uneingeschränktes Aufblasen eines in der Nähe eines abgestellten Kindersitzes angeordneten Airbags kann das im Kindersitz aufbewahrte Kind unter Umständen schwer verletzen. Aus diesem Grund wurden bereits zahlreiche Einrichtungen zum Erkennen eines auf einem Fahrzeugsitz angeordneten Kindersitzes vorgeschlagen.

Aus der EP 0 708 002 A1 ist beispielsweise eine Steuervorrichtung mit einer Einrichtung zur Kindersitzerkennung bekannt, die je eine im Fahrzeugsitz angeordnete Sende- und Empfangsantenne aufweist. Wird ein mit einem Transponder/Resonator ausgestatteter Kindersitz auf einem derart präparierten Fahrzeugsitz abgestellt, so wird seine Anwesenheit erkannt: Über die Sendeantenne wird ein Erregerfeld abgegeben, das vom Transponder aufgenommen, in charakteristischer Weise abgeändert und zurück zum Fahrzeugsitz übermittelt wird. Das von der Empfangsantenne aufgenommene Meßfeld wird hinsichtlich des für das Vorhandensein des Transponders charakteristischen Signals untersucht. Bei Erkennen eines auf dem Fahrzeugsitz angeordneten Kindersitzes wird eine aufprallerkennende und ein Rückhaltemittel auslösende Steuereinrichtung derart beeinflußt, daß ein Auslösesignal für das Rückhaltemittel gesperrt wird.

Ist der Kindersitz mit zwei Transpondern versehen und weist der Fahrzeugsitz je zwei Sende- und Empfangsantennen auf, so kann über das bloße Erkennen eines Kindersitzes hinaus seine Ausrichtung ermittelt werden. Ein vorwärtsgerichtet auf dem Fahrzeugsitz angeordneter Kindersitz kann damit von einem rückwärtsgerichtet auf dem Fahrzeugsitz angeordneten Kindersitz, der mit seiner Lehne dem Armaturenbrett zugewandt ist, unterschieden werden. Abhängig von der Orientierung des Kindersitzes kann eine Auslösung des Rückhaltemittels beeinflußt werden. Beispielsweise kann bei Erkennen eines vorwärtsgerichteten Kindersitzes ein Auslösen zulässig sein, bei Erkennen eines rückwärtsgerichteten Kindersitz wird ein Auslösen verhindert.

Die bekannte Steuervorrichtung beeinflußt ein Auslösen des Rückhaltemittels lediglich in Abhängigkeit von dem Erkennen eines vorwärts- oder rückwärtsgerichteten Kindersitzes, also auf der Grundlage weniger Parameter. Unter bestimmten Vorraussetzungen wird deshalb etwa ein Auslösen verhindert, obwohl ein Auslösen dem Kind im Kindersitz mehr nützen als schaden würde.

Aus der US 5 413 378 ist eine Steuervorrichtung für ein Rückhaltemittel in einem Kraftfahrzeug bekannt, die einen im Fahrzeugsitz angeordneten Gewichtssensor, diverse Aufnehmer für Fahrzeugsitzeinstellungen wie z. B. einen Aufnehmer für die Position des Fahrzeugsitzes und einen Aufnehmer für den Neigungswinkel der Fahrzeugsitzlehne, sowie Ultraschallsensoren aufweist. Abhängig von der mittels dieser Sensoren erkannten Position eines Insassen wird das Aufblasen eines Airbags dosiert. Wird beispielsweise ein weit in Richtung des Armaturenbretts geneigter Insasse erkannt, wird der Airbag lediglich schwach d. h. mit geringem Gasvolumen aufgeblasen.

Aufgabe der Erfindung ist es, die Nachteile der bekannten Steuervorrichtung zu vermeiden und insbesondere eine Steuervorrichtung zu schaffen, die differenziert bewertet, ob ein Rückhaltemittel trotz eines auf dem Fahrzeugsitz angeordneten Kindersitzes aktiviert werden darf.

Die Aufgabe wird erfindungsgemäß durch die Merkmale des Patentanspruchs 1 gelöst.

Die Steuervorrichtung liefert dabei ein Steuersignal, das abhängt von einem Statussignal der Einrichtung zur Kindersitzerkennung und gleichzeitig von der mittels eines geeigneten Aufnehmers erkannten Position des Fahrzeugsitzes. Wird die Position des Fahrzeugsitzes in die Auslöseentscheidung für das Rückhaltemittel miteinbezogen, so kann das Rückhaltemittel bedarfsgerecht ausgelöst werden: Ist beispielsweise der Fahrzeugsitz in seiner vordersten Position - also äußerst nahe am Armaturenbrett - eingerastet, so wird bei erkanntem Kindersitz ein Auslösen des Rückhaltemittels unabhängig von der erkannten Orientierung des Kindersitzes auf dem Fahrzeugsitz verhindert. Bei einem Fahrzeugsitz in seiner rückwärtigen Position - also nahe bei den Rücksitzen - kann selbst bei einem rückwärtsgerichteten Kindersitz auf dem Fahrzeugsitz ein Aufblasen des Rückhaltemittels für das Kind im Kindersitz unschädlich sein, wenn z.B. der aufgeblasene Airbag ein kleines Volumen aufweist und selbst in voll entfaltetem Zustand - natürlich ohne daß ein Aufprall vorliegt - die Lehne des rückwärtsgerichteten Kindersitzes nicht berührt. Hier kann bei einem Unfall durch den Airbag ein aufprallbedingtes Vorschnellen des Kindersitzes in Richtung Armaturenbrett verhindert werden und das Kind im Kindersitz vor den Folgen eines Aufpralls auf dem Armaturenbrett geschützt werden. Gleiches gilt für einen vorwärtsgerichteten Kindersitz.

Mit der erfindungsgemäßen Steuervorrichtung ist eine feinfühlig abgestimmte und auf den bestmöglichen Schutz des Kindes im Kindersitz ausgerichtete Auslösestrategie bezüglich des Rückhaltemittels gewährleistet. Wird ein Aufblasen des Airbags als ungefährlich eingestuft, wird das Kind durch den Airbag geschützt; wird ein Aufblasen des Airbags als für das Kind gefährlich eingestuft, wird eine durch das Aufblasen eines Airbags hervorgerufene Verletzung des Kindes verhindert. Diese wesentliche Verbesserung bekannter Steuervorrichtungen erfordert überdies nur einen geringen Einsatz von Bauteilen: Beispielsweise ist bei elektrisch verstellbaren Fahrzeugsitzen ein Aufnehmer für die Position des Fahrzeugsitzes bereits vorhanden. Das Signal dieses Aufnehmers kann also zweifach verwertet werden, zum einen für die elektrische sitzverstellung, zum anderen für die vorgeschlagene Steuervorrichtung für das Rückhaltemittel.

Vorteilhafte Weiterbildungen der Erfindung sind in den Unteransprüchen gekennzeichnet.

Die Erfindung und ihre Weiterbildungen werden anhand der Zeichnung näher erläutert. Es zeigen:
- Figur 1:: Den Querschnitt des vorderen Teils einer Fahrgastzelle mit der erfindungsgemäßen Steuervorrichtung, und
- Figur 2:: Eine Wahrheitstabelle mit Signalen der erfindungsgemäßen Steuervorrichtung.

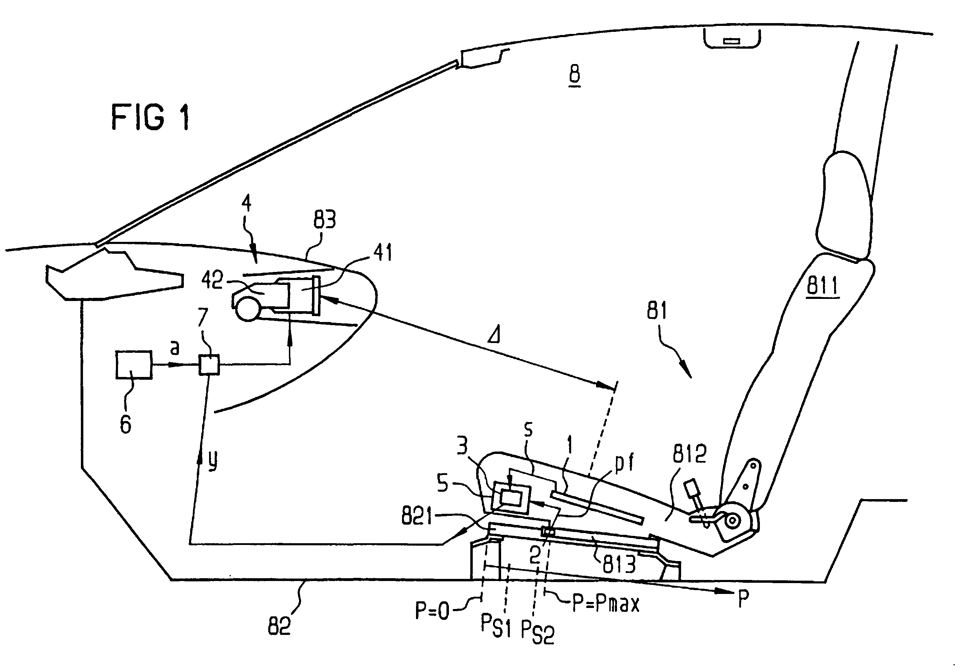

Figur 1 zeigt den vorderen Teil einer Fahrgastzelle 8 im Querschnitt, mit einem Fahrzeugsitz 81 mit Fahrzeugsitzrumpf 812 und Fahrzeugsitzlehne 811, und mit einer Abdeckung 83 als beifahrerseitig verlängertem Armaturenbrett. Der Fahrzeugsitz 81 ist über eine Sitzschiene 813 gleitbar auf einer im Fahrzeugboden 82 verankerten Schiene 821 gelagert. Der Fahrzeugsitz 81 ist longitudinal, also im wesentlichen parallel zur Fahrzeuglängsachse, zwischen einer ersten Position p = 0 als Position mit geringstem Abstand zur Abdeckung 83 und einer zweiten Position pₘₐₓ mit möglichst weitem Abstand zur Abdekkung 83 verstellbar. Die Steuervorrichtung weist einen Aufnehmer 2 für die Position p des Fahrzeugsitzes 81 auf. Ein solcher Aufnehmer 2 geht beispielsweise aus der EP 0 357 225 A1 hervor.

Im Fahrzeugsitzrumpf 812 ist des weiteren eine Einrichtung 1 zur Kindersitzerkennung angeordnet sowie ein eine Auswerteeinrichtung 3 enthaltendes Steuergerät 5. Das Steuergerät 5 enthält neben der Auswerteeinrichtung 3 eine Stromversorgung für die Auswerteeinrichtungt 3 und geeignete Schnittstellen zur Datenübertragung. Die Einrichtung 1 zur Kindersitzerkennung liefert ein Statussignal s an die Auswerteeinrichtung 3, der Aufnehmer 2 ein Signal pf für die erkannte Fahrzeugsitzposition p; die Auswerteeinrichtung 3 liefert ein Steuersignal y.

Unter der Abdeckung 83 ist ein Rückhaltemittel 4 in Form eines Airbags 41 an einer Halterung 42 befestigt. Eine aufprallerkennende Steuereinrichtung 6 liefert ein Auslösesignal a für das Rückhaltemittel 4. Zwischen aufprallerkennender Steuereinrichtung 6 und Airbag 41 ist eine Logikverknüpfung 7 geschaltet, die als Eingangsgrößen das Auslösesignal a der aufprallerkennenden Steuereinrichtung 6 und das Steuersignal y der Auswerteeinrichtung 3 aufweist. Das Steuersignal y kann alleine nicht zu einem Auslösen des Rückhaltemittels 4 führen. Es kann lediglich das von der aufprallerkennenden Steuereinrichtung 6 gelieferte Auslösesignal a freigeben oder sperren.

Die Einrichtung 1 zur Kindersitzerkennung ist vorzugsweise gemäß der EP 0 708 002 A1 ausgebildet und kann unterschiedliche Statussignale s liefern, beispielsweise ein Statussignal s2 wenn ein vorwärtsgerichteter Kindersitz auf dem Fahrzeugsitz 81 erkannt wird, oder ein Statussignal s3, wenn ein rückwärtsgerichteter Kindersitz auf dem Fahrzeugsitz 81 erkannt wird. Für die Erfindung ist es jedoch ausreichend, wenn von der Einrichtung 1 zur Kindersitzerkennung ein Statussignal s1 geliefert wird, durch das ein auf dem Fahrzeugsitz 81 angeordneter Kindersitz erkannt wird, unabhängig von seiner Orientierung.

Vorzugsweise kann die Einrichtung 1 zur Kindersitzerkennung zusätzlich ein weiteres Statussignal s4 liefern, wenn ein Kindersitz erkannt wird, der weder vorwärts- noch rückwärtsgerichtet angeordnet ist, sondern versetzt oder verdreht. Die Erfindung ist nicht an eine bestimmte Ausbildung einer Einrichtung zum Erkennen eines Kindersitzes gebunden. Es kann eine beliebige Einrichtung verwendet werden, ungeachtet des ihr zugrundeliegenden physikalischen Prinzips wie auch des Einbauortes. In jedem Fall muß von der Einrichtung zur Kindersitzerkennung erkannt werden, ob ein Kindersitz auf dem Fahrzeugsitz angeordnet ist oder nicht. Weitere Informationen, insbesondere zur Orientierung des Kindersitzes, sind jedoch hinsichtlich einer optimierten Auslösestrategie für das Rückhaltemittel sehr vorteilhaft.

Insbesondere wenn die Einrichtung 1 zur Kindersitzerkennung im Fahrzeugsitz 81, sei es in der Fahrzeugsitzlehne 811 oder im Fahrzeugsitzrumpf 812 angeordnet ist, ist es aufgrund des gleichfalls im oder am Fahrzeugsitz 81 angeordneten Aufnehmers 2 für die Position des Fahrzeugsitzes 81 vorteilhaft, auch die Auswerteeinrichtung 3 im oder am Fahrzeugsitz 81 anzuordnen. Die Auswerteeinrichtung 3 ist vorzugsweise als Mikroprozessor ausgebildet, der die eingehenden Signale s,pf verarbeitet und abhängig von der erkannten Fahrzeugsitzposition p und dem Statussignal s das Steuersignal y ausgibt. Mit der Auswerteeinrichtung 3 sind vorzugsweise weitere Sensoren zur Aufnahme weiterer Parameter des Fahrzeugsitzes 81, beispielsweise für den Neigungswinkel der Fahrzeugsitzlehne 811 und weitere Aktoren, beispielsweise Elektromotoren zum Verstellen des Neigungswinkels der Fahrzeugsitzlehne 811 elektrisch verbunden. Damit weist der Fahrzeugsitz 81 eine einzige Auswerteeinrichtung 3 für alle elektrischen Funktionen im Fahrzeugsitz auf. Vorzugsweise wird das Steuersignal y über eine geeignete Schnittstelle einem Fahrzeugbussystem zugeführt.

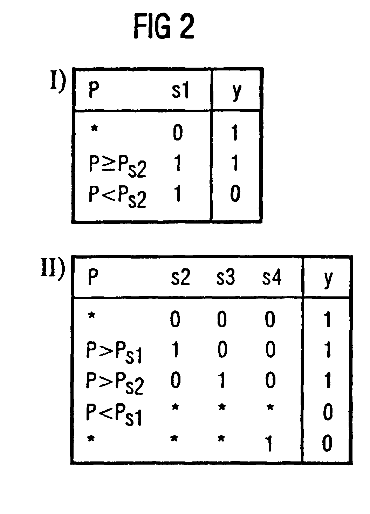

Figur 2 zeigt eine beispielhafte aber praxisorientierte Wahrheitstabelle mit der Belegung des Steuersignals y der erfindungsgemäßen Steuervorrichtung in Abhängigkeit von der Belegung des Statussignals s der Einrichtung 1 zur Kindersitzerkennung und der erkannten Fahrzeugsitzposition p. Dabei wird das mit einer 1 belegte Steuersignal y als Freigabesignal und das mit einer 0 belegte Steuersignal y als Sperrsignal für das Auslösesignal a gewertet. Ein Stern in der Tabelle nach Figur 2 steht für eine beliebeige Belegung des entsprechenden Signals. Unter I) kann die Einrichtung 1 zur Kindersitzerkennung lediglich zwischen vorhandenem (s1 = 1) und nicht vorhandenem (s1 = 0) Kindersitz unterscheiden. Unter II) können vorwärts (s2 = 1), rückwärts (s3 = 1) und sonstig (s4 = 1) angeordneter Kindersitz unterschieden werden.

Unter I) wird gemäß Figur 2 ein Auslösen des Rückhaltemittels 4 freigegeben, wenn kein Kindersitz erkannt wird, oder wenn ein Kindersitz und gleichzeitig eine Fahrzeugsitzposition p erkannt wird, die beispielsweise einen Schwellwert p_{S2} überschreitet. Das Überschreiten des Schwellwerts p_{S2} steht dafür, daß der Fahrzeugsitz eine Position einnimmt, die hinter der durch den Schwellwert p_{S2} gekennzeichneten Position des Fahrzeugsitzes 81 liegt. Der Fahrzeugsitz 81 und damit ein auf dem Fahrzeugsitz 81 angeordneter Kindersitz sind derart weit - mit dem Mindestabstand Δ - von der Abdeckung 83 entfernt, daß ein Aufblasen des Airbags 41 nicht mehr schädlich auf ein Kind im Kindersitz einwirken kann. Bei der Bemaßung dieses Schwellwerts p_{S2} und nachfolgend beschriebener Schwellwerte sind u.a. der Verstellbereich des Fahrzeugsitzes 81, die Größe der ggf abgestellten Kindersitze und die Größe bzw Reichweite des Airbags 41 im aufgeblasenen Zustand zu berücksichtigen.

Unter II) wirkt das Steuersignal y als Freigabesignal, wenn kein Kindersitz erkannt wird, oder wenn ein vorwärtsgerichteter Kindersitz erkannt wird und die Fahrzeugsitzposition p größer ist als ein erster Schwellwert p_{S1}, oder wenn ein rückwärtsgerichteter Kindersitz erkannt wird und die Fahrzeugsitzposition p größer als ein zweiter Schwellwert p_{S2}. Um ein Auslösen noch zu gestatten darf bei einem vorwärtsgerichteten Kindersitz der Fahrzeugsitz 81 also näher an der Abdekkung 83 angeordnet sein als bei einem rückwärtsgerichteten Kindersitz.

## Patentansprüche

1. Steuervorrichtung für ein Rückhaltemittel in einem Kraftfahrzeug, mit einer Einrichtung (1) zum Erkennen eines auf einem Fahrzeugsitz (81) angeordneten Kindersitzes, mit einem Aufnehmer (2) für die Position (p) des Fahrzeugsitzes (81), und mit einer Auswerteeinrichtung (3), die ein Steuersignal (y) für das Rückhaltemittel (4) liefert abhängig von der Fahrzeugsitzposition (p) und abhängig von einem Statussignal (s) der Einrichtung (1) zur Kindersitzerkennung,
bei der das Steuersignal (y) mit einem Auslösesignal (a) für das Rückhaltemittel (4) logisch verknüpft ist (7), wobei das Auslösesignal (a) von einer aufprallerkennenden Steuereinrichtung (6) geliefert wird, dadurch gekennzeichnet, daß das Steuersignal (y) als Freigabesignal für das Auslösesignal (a) ausgebildet ist, wenn ein Kindersitz und gleichzeitig eine Fahrzeugsitzposition (p) erkannt wird, durch die ein Mindestabstand (Δ) zwischen Fahrzeugsitz (81) und Rückhaltemittel (4) gekennzeichnet ist.

2. Steuervorrichtung nach Anspruch 1, bei der von der Einrichtung (1) zur Kindersitzerkennung ein festgelegtes Statussignal (sl) geliefert wird, wenn ein Kindersitz auf dem Fahrzeugsitz (81) erkannt wird.

3. Steuervorrichtung nach Anspruch 1, bei der von der Einrichtung (1) zur Kindersitzerkennung ein festgelegtes Statussignal (s2) geliefert wird, wenn ein vorwärtsgerichteter Kindersitz auf dem Fahrzeugsitz (81) erkannt wird.

4. Steuervorrichtung nach Anspruch 1, bei der von der Einrichtung (1) zur Kindersitzerkennung ein festgelegtes Statussignal (s3) geliefert wird, wenn ein rückwärtsgerichteter Kindersitz auf dem Fahrzeugsitz (81) erkannt wird.

5. Steuervorrichtung nach Anspruch 1, die im oder am Fahrzeugsitz (81) angeordnet ist.

6. Steuervorrichtung nach Anspruch 1, bei der das Steuersignal (y) als Freigabesignal für das Auslösesignal (a) ausgebildet ist, wenn von der Einrichtung (1) zur Kindersitzerkennung kein Kindersitz erkannt wird.

7. Steuervorrichtung nach Anspruch 1, bei der das Steuersignal (y) als Freigabesignal für das Auslösesignal ausgebildet ist, wenn ein vorwärtsgerichteter Kindersitz und gleichzeitig eine Fahrzeugsitzposition (p) erkannt wird, durch die ein Mindestabstand (Δ) zwischen Fahrzeugsitz (81) und Rückhaltemittel (4) gekennzeichnet ist.

## Claims

1. Control device for a restraint system in a motor vehicle, with a device (1) for recognition of a child's seat positioned on a vehicle seat (81), with a sensor (2) for the position (p) of the vehicle seat (81), and with a data unit (3) which delivers a control signal (y) for the restraint system (4) dependent on the vehicle seat position (p) and dependent on a status signal (s) from the device (1) for recognition of a child's seat,
wherein the control signal (y) is logically linked (7) to a triggering signal (a) for the restraint system (4), where the triggering signal (a) is delivered by a control unit (6) which recognises an impact,
characterised in that the control signal (y) is in the form of a release signal for the triggering signal (a) if a child's seat is recognised and at the same time a vehicle seat position (p) is recognised which identifies a minimum distance ( ) between the vehicle seat (81) and the restraint system (4).

2. Control device in accordance with Claim 1, wherein the device (1) for recognition of a child's seat delivers a defined status signal (s1) if a child's seat is recognised on the vehicle seat (81).

3. Control device in accordance with Claim 1, wherein the device (1) for recognition of a child's seat delivers a defined status signal (s2) if a forward-facing child's seat is recognised on the vehicle seat (81).

4. Control device in accordance with Claim 1, wherein the device (1) for recognition of a child's seat delivers a defined status signal (s3) if a backwardfacing child's seat is recognised on the vehicle seat (81).

5. Control device in accordance with Claim 1, which is located in or on the vehicle seat (81).

6. Control device in accordance with Claim 1, wherein the control signal (y) is in the form of a release signal for the triggering signal (a) if the device (1) for recognition of a child's seat does not recognise a child's seat.

7. Control device in accordance with Claim 1, wherein the control signal (y) is in the form of a release signal for the triggering signal if a forward-facing child's seat is recognised and at the same time a vehicle seat position (p) is recognised which identifies a minimum distance ( ) between the vehicle seat (81) and the restraint system (4).

## Revendications

1. Dispositif de commande d'un moyen de retenue dans un véhicule automobile, comprenant un dispositif (1) servant à constater la présence d'un siège d'enfant disposé sur un siège de véhicule (81), un capteur (2) de la position (P) du siège de véhicule (81) et un dispositif d'analyse (3) qui délivre un signal de commande (y), destiné au moyen de retenue (4), en fonction de la position de siège de véhicule (P) et en fonction d'un signal de statut (s) du dispositif (1) de constatation de présence de siège d'enfant, dans lequel le signal de commande (y) est soumis à une combinaison logique (7) avec un signal de déclenchement (a) destiné au moyen de retenue (4), le signal de déclenchement (a) étant délivré par un dispositif de commande (6) constatant l'existence d'un choc, caractérisé en ce que le signal de commande (y) est conçu en tant que signal d'autorisation pour le signal de déclenchement (a) lorsque sont constatées la présence d'un siège d'enfant et en même temps une position de siège de véhicule (P) par laquelle une distance minimale (Δ) entre le siège de véhicule (81) et le moyen de retenue (4) est caractérisée.

2. Dispositif de commande suivant la revendication 1, dans lequel un signal de statut (s1) déterminé est délivré par le dispositif (1) de constatation de présence de siège d'enfant lorsque la présence d'un siège d'enfant sur le siège de véhicule (81) est constatée.

3. Dispositif de commande suivant la revendication 1, dans lequel un signal de statut (s2) déterminé est délivré par le dispositif (1) de constatation de présence de siège d'enfant lorsque la présence d'un siège d'enfant dirigé vers l'avant sur le siège de véhicule (81) est constatée.

4. Dispositif de commande suivant la revendication 1, dans lequel un signal de statut (s3) déterminé est délivré par le dispositif (1) de constatation de présence de siège d'enfant lorsque la présence d'un siège d'enfant dirigé vers l'arrière sur le siège de véhicule (81) est constatée.

5. Dispositif de commande suivant la revendication 1, qui est disposé dans ou sur le siège de véhicule (81).

6. Dispositif de commande suivant la revendication 1, dans lequel le signal de commande (y) est conçu en tant que signal d'autorisation pour le signal de déclenchement (a) lorsque la présence d'un siège d'enfant n'est pas constatée par le dispositif (1) de constatation de présence de siège d'enfant.

7. Dispositif de commande suivant la revendication 1, dans lequel le signal de commande (y) est conçu en tant que signal d'autorisation pour le signal de déclenchement lorsque sont constatées la présence d'un siège d'enfant dirigé vers l'avant et en même temps une position de siège de véhicule (P) par laquelle une distance minimale (Δ) entre le siège de véhicule (81) et le moyen de maintien (4) est caractérisée.
